# EUROPEAN PATENT APPLICATION

(11) **EP 4 675 732 A1**
(43) Date of publication of application: **07.01.2026**
(21) Application number: 24913461.0
(22) Date of filing: 26.11.2024
(51) Int. Cl.: H01M 10/04, H01M 10/0587

(54) **ELECTRODE ASSEMBLY, AND BATTERY AND BATTERY PACK COMPRISING SAME**

(30) Priority: 27.12.2023 KR 20230193122
(71) Applicant: LG Energy Solution, Ltd., Seoul 07335 (KR)
(72) Inventor: LEE, Hye-Jin, Daejeon 34122 (KR); PARK, Min-Gu, Daejeon 34122 (KR); SHIN, Hang-Soo, Daejeon 34122 (KR); LEE, Myung-An, Daejeon 34122 (KR)
(74) Representative: Goddar, Heinz J.
(86) International application number: PCT/KR2024/018892
(87) International publication number: WO 2025/143568

(57) **Abstract**

An electrode assembly according to the present disclosure includes a stack including a first electrode, a second electrode, and a separator interposed therebetween, and configured to be wound around a winding axis to form a central winding hole and an outer surface, and a fixing member configured to cover at least a portion of the outer surface along a circumferential direction of the outer surface.

## Description

### TECHNICAL FIELD

The present disclosure relates to an electrode assembly, and a battery and a battery pack including the same.

This application is based on and claims priority from Korean Patent Application No. 10-2023-0193122, filed on December 27, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices.

These batteries are attracting attention as a new energy source for improving eco-friendliness and energy efficiency because of the primary advantage of dramatically reducing the use of fossil fuels and another advantage of not generating by-products resulting from energy use.

Batteries currently widely used include lithium-ion batteries, lithium-polymer batteries, nickel-cadmium batteries, nickel-hydrogen batteries, nickel-zinc batteries, and the like. The operating voltage of this unit battery is approximately 2.5V to 4.5V. Therefore, when an output voltage higher than this is required, a battery pack may be configured by connecting a plurality of batteries in series. In addition, a battery pack may be configured by connecting multiple batteries in parallel depending on the charge/discharge capacity required for the battery pack. Accordingly, the number of batteries included in the battery pack and electrical connection thereof may be set in various ways depending on the required output voltage or charge/discharge capacity.

Meanwhile, the batteries include existing cylindrical, prismatic, and pouch-type batteries. The battery may be manufacture by interposing a separator, which is an insulator, between a positive electrode and a negative electrode, winding the same to form a jellyroll-type electrode assembly, and storing the electrode assembly along with an electrolyte in a battery housing.

This jellyroll-type electrode assembly is produced by winding a stack in which the positive electrode, the negative electrode, and the separator are stacked. The more the jellyroll is formed close to a circular shape, the more advantageous it is in terms of energy density and service life, so it is important to maintain the standard deviation of the cylindricality as constant as possible in the production process and also to maintain the difference between the maximum and minimum outer diameters as constant as possible.

However, in the prior art, there is a problem in which, even though the standard deviation of cylindricality and the standard deviation of the difference between the maximum and minimum outer diameters are low before battery activation, the standard deviation of cylindricality and the standard deviation of the difference between the maximum and minimum outer diameters are excessively increased after battery activation.

### DISCLOSURE

### Technical Problem

The present disclosure is designed to solve the problems of the related art, and therefore the present disclosure is directed to providing an electrode assembly in which the standard deviation of cylindricality and the standard deviation of the difference between the maximum and minimum outer diameters are improved after activation of the battery.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery in which a stack including a first electrode, a second electrode, and a separator interposed therebetween is wound around a winding axis to form a central winding hole and an outer surface, and a fixing member may cover at least a portion of the outer surface along a circumferential direction of the outer surface.

The fixing member may cover at least a portion of an area of the outer surface corresponding to the separator.

The fixing member may cover at least a portion of an end where the winding of the stack ends.

A lower end of the fixing member may be positioned at the same height as or higher than a lower end of the separator. A distance between the lower end of the fixing member and the lower end of the separator may be 0.055 times a height of the separator or less.

An upper end of the fixing member may be lower than an upper end of the separator by 0.04 to 0.1 times a height of the separator.

The first electrode may protrude above the separator, and the second electrode may protrude below the separator.

The first electrode may be a positive electrode, and the second electrode may be a negative electrode.

According to another aspect of the present disclosure, there is provided a battery including an electrode assembly according to the present disclosure.

According to another aspect of the present disclosure, there is provided a battery pack including a battery according to the present disclosure.

According to another aspect of the present disclosure, there is provided a vehicle including a battery pack according to the present disclosure.

### Advantageous Effects

According to one aspect of the present disclosure, it is possible to effectively prevent the unwinding of the electrode assembly after winding. The fixing member covers a portion of the entire circumferential area of the outer surface at an appropriate ratio to maximize the effect of preventing the stack from unwinding and also maximize the energy density of the electrode assembly. The present disclosure is able to prevent the phenomenon in which, when the fixing member is wound once or more in the circumferential direction of the outer surface, the fixing member protrudes outside the outer surface due to tolerance.

According to another aspect of the present disclosure, it is possible to prevent or minimize an increase in the standard deviation of the cylindricality of the electrode assembly and the standard deviation of the difference between the maximum outer diameter and the minimum outer diameter after the activation of the battery, thereby producing a battery in which the electrode assembly has a substantially perfect cylindrical shape over the entire area.

### DESCRIPTION OF DRAWINGS

FIG. 1 is a drawing illustrating a stack forming an electrode assembly according to an embodiment of the present disclosure.
FIGS. 2 to 4 are drawings illustrating an electrode assembly according to an embodiment of the present disclosure.
FIG. 5 is a drawing illustrating a battery according to an embodiment of the present disclosure.
FIG. 6 is a drawing illustrating a first current collector included in a battery according to an embodiment of the present disclosure.
FIG. 7 is a partially cross-sectional view of a battery according to an embodiment of the present disclosure.
FIG. 8 is a drawing illustrating a second current collector included in a battery according to an embodiment of the present disclosure.
FIG. 9 is a partially cross-sectional view of a battery according to an embodiment of the present disclosure.
FIG. 10 is a drawing illustrating a battery to which an insulating member of the present disclosure is applied.
FIG. 11 is a drawing illustrating a battery pack according to an embodiment of the present disclosure.
FIG. 12 is a drawing illustrating a vehicle according to the present disclosure.

### BEST MODE

Hereinafter, preferred embodiments of the present disclosure will be described in detail with reference to the accompanying drawings. The accompanying drawings illustrate a preferred embodiment of the present disclosure and together with the foregoing disclosure, serve to provide further understanding of the technical features of the present disclosure, and thus, the present disclosure is not construed as being limited to the drawing. The same reference numerals may indicate the same elements. In addition, the thicknesses, ratios, and sizes of the elements shown in the attached drawings may be exaggerated for convenience of explanation and clarification.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Meanwhile, although terms indicating directions such as up, down, left, right, front, and back directions are used in this specification, it is obvious to those skilled in the art to which the present disclosure pertains that these terms are only for convenience of explanation with reference the relevant drawings and may vary depending on the position of the target object or the position of the observer.

Therefore, the description proposed herein is just a preferable example for the purpose of illustrations only, not intended to limit the scope of the disclosure, so it should be understood that other equivalents and modifications could be made thereto without departing from the scope of the disclosure.

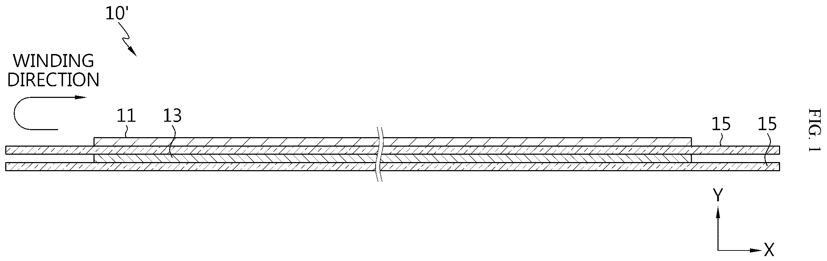

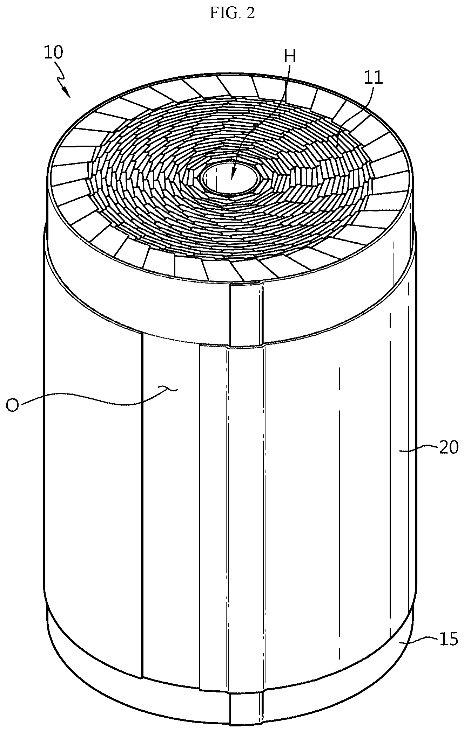

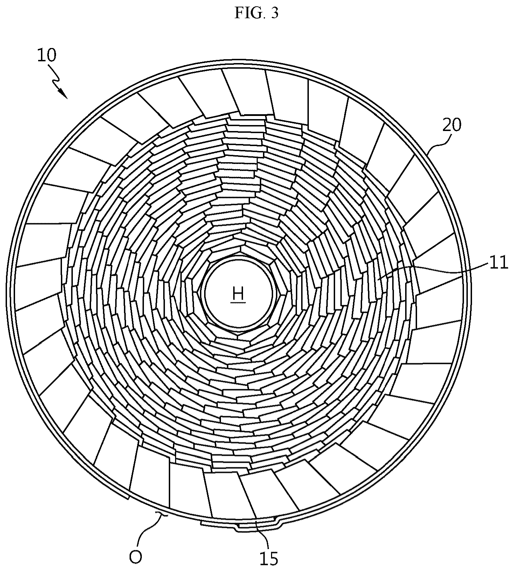

FIG. 1 is a drawing illustrating a stack 10' forming an electrode assembly 10 according to an embodiment of the present disclosure. FIGS. 2 to 4 are drawings illustrating an electrode assembly 10 according to an embodiment of the present disclosure.

Referring to FIGS. 1 to 4, the electrode assembly 10 according to the present disclosure includes a first electrode 11, a second electrode 13, a separator 15, and a fixing member 20.

Referring to FIG. 1, a stack 10' including a first electrode 11, a second electrode 13, and a separator 15 interposed therebetween may be wound around a winding axis. The stack 10' may be wound to form a central winding hole H and an outer surface O.

For example, a stack 10' in which a first electrode 11, a separator 15, a second electrode 13, and a separator 15 are sequentially stacked may be wound around a winding axis. A pair of separators 15 may be formed longer than the first electrode 11 and the second electrode 13 and may be preferentially wound by a winding core. The first electrode 11 and the second electrode 13 may be wound between the separators 15 preferentially wound. The separator 15 may be formed longer than the first electrode 11 and the second electrode 13, thereby covering the first electrode 11 and second electrode 13 wound. The separator 15 may be positioned on the outer surface O of the wound electrode assembly 10. That is, the outermost side of the electrode assembly 10 may be covered by the separator 15.

The fixing member 20 may cover at least a portion of the outer surface O along the circumferential direction of the outer surface O. The fixing member 20 may cover at least a portion of the area of the outer surface O corresponding to the separator 15. The fixing member 20 may cover at least a portion of the winding end of the stack 10'. The fixing member 20 may cover a portion of the entire circumferential area of the outer surface O of the electrode assembly 10 at an appropriate ratio. The fixing member 20 may cover approximately 90 to 95% of the entire circumferential area of the outer surface O of the electrode assembly 10.

According to this configuration of the present disclosure, the loosening of the electrode assembly 10 after winding may be effectively prevented. The fixing member 20 may maximize the effect of preventing the stack 10' from loosening by covering a portion of the entire circumferential area of the outer surface O of the electrode assembly 10 at an appropriate ratio, thereby maximizing the energy density of the electrode assembly 10. When the fixing member 20 is wound once or more along the circumferential direction of the outer surface O, the fixing member 20 may protrude outside the outer surface O due to tolerance, but this phenomenon may be prevented according to the present disclosure.

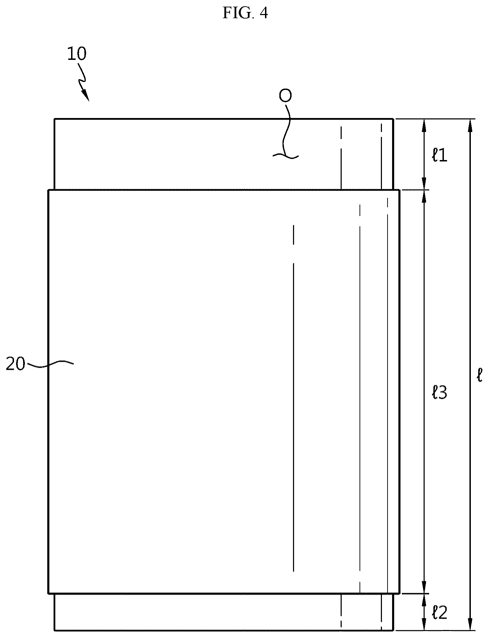

Referring back to FIG. 4, the lower end of the fixing member 20 may be positioned higher than the lower end of the separator 15. The difference in distance between the lower end of the fixing member 20 and the lower end of the separator 15 may be approximately 0.055 times the height (vertically extended length) of the separator 15 or less. Meanwhile, the upper end of the fixing member 20 may be lower than the upper end of the separator 15 by approximately 0.04 to 0.1 times the height of the separator 15.

If the fixing member 20 is attached such that the lower end thereof is identical to the height of the lower end of the separator 15 and such that the upper end is identical to the upper end of the separator 15, the loosening of the stack 10' may be most effectively prevented, so that the electrode assembly 10 may remain in a nearly circular shape before and after activation of the battery 1. However, the attaching of the fixing member 20 described above may cause the following problems in process.

The separator 15 wound continuously from the winding center may minimize the tolerance that may occur as the winding progresses, but the fixing member 20 may have tolerance due to the meandering because it is wound around the outer surface O of the electrode assembly 10 the winding of which is completed. In addition, the fixing member 20 may be inspected by a vision inspector to see if it is properly attached after the winding is completed. In this case, if the fixing member 20 is attached at the same height as the separator 15, it may be difficult for the vision inspector to determine whether the separator 15 is attached to the outermost surface O or the fixing member 20 is attached thereto. The tolerance due to the meandering that may occur when the fixing member 20 is wound approximately 90 to 95% (i.e., approximately 0.9 to 0.95 turns) of the entire circumferential area of the outer surface O of the stack 10', and the minimum unit that the vision inspector is able to measure may be approximately 2 mm.

For economic reasons and process-related reasons described above, it is preferable that the fixing member 20 be attached to the corresponding area of the separator 15 at a height lower than the height of the separator 15, instead of being attached at the same height as the height of the separator 15. However, if the fixing member 20 is excessively lower than the height of the separator 15, the standard deviation of the cylindricality of the electrode assembly 10 and the standard deviation of the difference between the maximum outer diameter and the minimum outer diameter may be excessively increased after the activation of the battery 1.

For the above reasons, it is desirable that the upper end of the fixing member 20 be lower than the upper end of the separator 15 by a predetermined height and that the lower end be higher than the lower end of the separator 15 by a predetermined height.

An experiment was conducted on the conditions that the distance 11 between the upper end of the fixing member 20 and the upper end of the separator 15 is set to approximately 5 mm or more and that the distance 12 between the lower end of the fixing member 20 and the lower end of the separator 15 is set to approximately 2 mm or more in consideration of the tolerance that may occur when winding the fixing member 20 and the minimum measurement unit of the vision inspector, which is approximately 2 mm.

Experiment 1 included in the embodiment of the present disclosure was conducted by measuring the cylindricality, maximum outer diameter, and minimum outer diameter before and after the activation of the battery 1 in the case where the height 1 of the separator 15 is approximately 72 mm, where the height 13 of the fixing member 20 is approximately 65 mm, where the distance 11 between the upper end of the fixing member 20 and the upper end of the separator 15 is approximately 5 mm, and where the distance 12 between the lower end of the fixing member 20 and the lower end of the separator 15 is approximately 2 mm. As a result of 19 experiments as shown in Table 1 below, the standard deviation of the cylindricality was approximately 0.017, and the standard deviation of the difference between the maximum outer diameter and the minimum outer diameter was approximately 0.0169.

**[Table 1]**

| Experiment Numbers | Difference (cm) between maximum and minimum outer diameters of electrode assembly after battery activation | Cylindricality of electrode assembly after battery activation |
|---|---|---|
| 1 | 0.163 | 0.128 |
| 2 | 0.148 | 0.13 |
| 3 | 0.145 | 0.121 |
| 4 | 0.155 | 0.14 |
| 5 | 0.16 | 0.134 |
| 6 | 0.152 | 0.124 |
| 7 | 0.143 | 0.116 |
| 8 | 0.158 | 0.125 |
| 9 | 0.194 | 0.155 |
| 10 | 0.129 | 0.134 |
| 11 | 0.189 | 0.152 |
| 12 | 0.147 | 0.104 |
| 13 | 0.165 | 0.136 |
| 14 | 0.171 | 0.102 |
| 15 | 0.131 | 0.13 |
| 16 | 0.167 | 0.151 |
| 17 | 0.167 | 0.096 |
| 18 | 0.137 | 0.098 |
| 19 | 0.146 | 0.131 |
| Standard deviation | 0.016884 | 0.017002 |

Comparative Example 1 was conducted by measuring the cylindricality, maximum outer diameter, and minimum outer diameter before and after the activation of the battery 1 in the case where the height 1 of the separator 15 is approximately 72 mm, where the height 13 of the fixing member 20 is approximately 63 mm, where the distance 11 between the upper end of the fixing member 20 and the upper end of the separator 15 is approximately 5 mm, and where the distance 12 between the lower end of the fixing member 20 and the lower end of the separator 15 is approximately 4 mm. As a result of 19 experiments as shown in Table 2 below, the standard deviation of the cylindricality was approximately 0.018, and the standard deviation of the difference between the maximum outer diameter and the minimum outer diameter was approximately 0.0253.

**[Table 2]**

| Experiment Numbers | Difference (cm) between maximum and minimum outer diameters of electrode assembly after battery activation | Cylindricality of electrode assembly after battery activation |
|---|---|---|
| 1 | 0.177 | 0.114 |
| 2 | 0.146 | 0.125 |
| 3 | 0.172 | 0.161 |
| 4 | 0.158 | 0.105 |
| 5 | 0.192 | 0.134 |
| 6 | 0.153 | 0.158 |
| 7 | 0.146 | 0.16 |
| 8 | 0.155 | 0.098 |
| 9 | 0.122 | 0.133 |
| 10 | 0.151 | 0.131 |
| 11 | 0.22 | 0.121 |
| 12 | 0.219 | 0.136 |
| 13 | 0.158 | 0.12 |
| 14 | 0.185 | 0.115 |
| 15 | 0.136 | 0.113 |
| 16 | 0.149 | 0.131 |
| 17 | 0.147 | 0.135 |
| 18 | 0.147 | 0.158 |
| 19 | 0.173 | 0.13 |
| Standard deviation | 0.025274 | 0.017975 |

Comparative Example 2 was conducted by measuring the cylindricality, maximum outer diameter, and minimum outer diameter before and after the activation of the battery 1 in the case where the height 1 of the separator 15 is approximately 72 mm, where the height 13 of the fixing member 20 is approximately 57 mm, where the distance 11 between the upper end of the fixing member 20 and the upper end of the separator 15 is approximately 13 mm, and where the distance 12 between the lower end of the fixing member 20 and the lower end of the separator 15 is approximately 2 mm. As a result of 19 experiments as shown in Table 3 below, the standard deviation of the cylindricality was approximately 0.021, and the standard deviation of the difference between the maximum outer diameter and the minimum outer diameter was approximately 0.0254.

**[Table 3]**

| Experiment Numbers | Difference (cm) between maximum and minimum outer diameters of electrode assembly after battery activation | Cylindricality of electrode assembly after battery activation |
|---|---|---|
| 1 | 0.173 | 0.086 |
| 2 | 0.166 | 0.069 |
| 3 | 0.153 | 0.119 |
| 4 | 0.099 | 0.081 |
| 5 | 0.154 | 0.097 |
| 6 | 0.164 | 0.121 |
| 7 | 0.143 | 0.107 |
| 8 | 0.156 | 0.073 |
| 9 | 0.196 | 0.097 |
| 10 | 0.169 | 0.122 |
| 11 | 0.122 | 0.101 |
| 12 | 0.114 | 0.102 |
| 13 | 0.157 | 0.106 |
| 14 | 0.133 | 0.079 |
| 15 | 0.102 | 0.14 |
| 16 | 0.111 | 0.102 |
| 17 | 0.136 | 0.129 |
| 18 | 0.144 | 0.148 |
| 19 | 0.126 | 0.099 |
| Standard deviation | 0.025446 | 0.021166 |

Referring to the experimental results above, the standard deviation of the cylindricality and the standard deviation of the difference between the maximum outer diameter and the minimum outer diameter are 0.02 or less only in Experiment 1. In Comparative Examples 1 and 2, the standard deviation of the cylindricality and/or the standard deviation of the difference between the maximum outer diameter and the minimum outer diameter exceed 0.02.

Therefore, it may be desirable that the upper end of the fixing member 20 be positioned lower than the upper end of the separator 15. In addition, it may be desirable that the distance 11 between the upper end of the fixing member 20 and the upper end of the separator 15 be approximately 0.04 to 0.1 times the total height 1 of the separator 15. Meanwhile, it may be desirable that the lower end of the fixing member 20 be positioned higher than the lower end of the separator 15 or at the same height as the lower end of the separator 15. In addition, it may be desirable that the distance between the lower end of the fixing member 20 and the lower end of the separator 15 be approximately 0.055 times the total height 1 of the separator 15 or less.

According to this configuration of the present disclosure, since the standard deviation of the cylindricality and the standard deviation of the difference between the maximum and minimum outer diameters are less than 0.02 after activation of the battery 1, the battery 1 may be produced so that the electrode assembly 10 has a shape closest to a perfect cylinder over the entire area.

The reason why the desirable range of the distance 11 between the upper end of the fixing member 20 and the upper end of the separator 15 is different from the desirable range of the distance 12 between the lower end of the fixing member 20 and the lower end of the separator 15 will be explained below along with the overall structure of the battery 1 including the electrode assembly 10 according to the present disclosure.

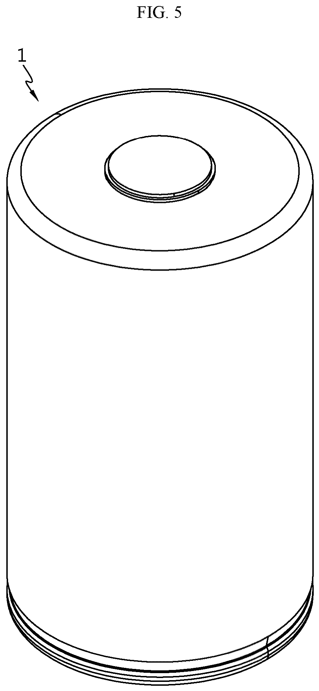

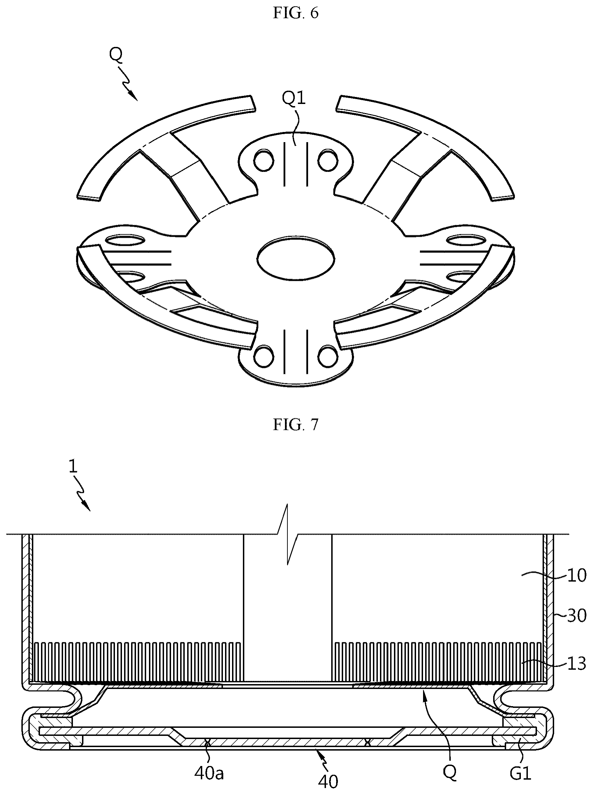

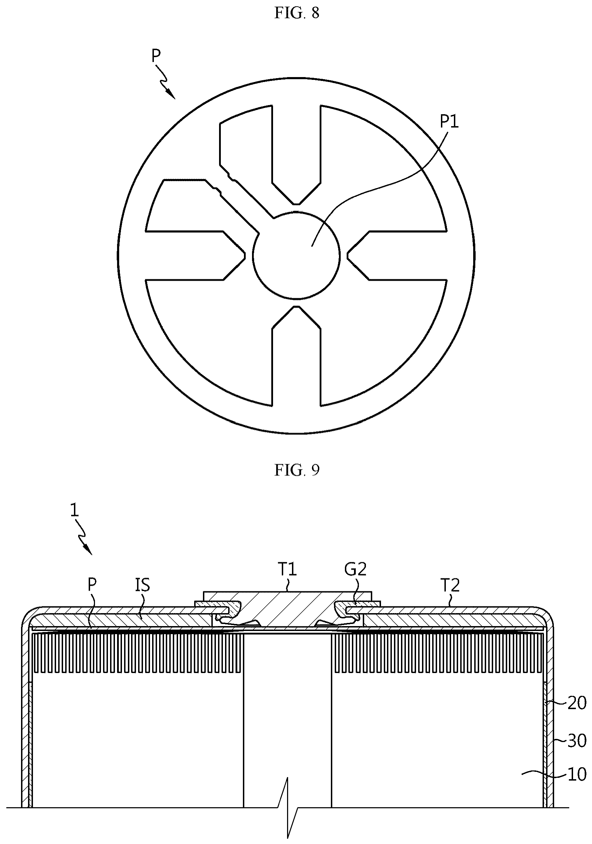

FIG. 5 is a drawing illustrating a battery according to an embodiment of the present disclosure. FIG. 6 is a drawing illustrating a first current collector included in a battery according to an embodiment of the present disclosure. FIG. 7 is a partially cross-sectional view of a battery according to an embodiment of the present disclosure. FIG. 8 is a drawing illustrating a second current collector included in a battery according to an embodiment of the present disclosure. FIG. 9 is a partially cross-sectional view of a battery according to an embodiment of the present disclosure

The overall electrode configuration of the battery 1 will be described with reference to FIGS. 5, 7, and 9.

A first electrode 11 may be a positive electrode, and a second electrode 13 may be a negative electrode. The first electrode 11 may protrude above the separator 15. The second electrode 13 may protrude below the separator 15.

The first electrode 11 may include a first active material portion and a first uncoated portion.

The first active material portion may be formed by coating a first electrode active material layer on at least one surface of a first electrode plate. The first active material portion may be formed along the winding direction.

The first uncoated portion may be formed by not applying the first electrode active material layer to the first electrode plate. The first uncoated portion may be formed along the winding direction. The first uncoated portion may be provided at the top of the electrode assembly 10. At least a portion of the first uncoated portion may function as a first electrode tab. At least a portion of the first uncoated portion may protrude above the separator 15.

The second electrode 13 may include a second active material portion and a second uncoated portion.

The second active material portion may be formed by coating a second electrode active material layer on at least one surface of a second electrode plate. The second active material portion may be formed along the winding direction.

The second uncoated portion may be formed by not applying the second electrode active material layer to the second electrode plate. The second uncoated portion may be formed along the winding direction. The second uncoated portion may be provided at the top of the electrode assembly 10. At least a portion of the second uncoated portion may function as a second electrode tab. At least a portion of the second uncoated portion may protrude below the separator 15.

Referring to FIGS. 6 and 7, the battery 1 according to the present disclosure may include a first current collector Q, a battery housing 30, a top cap 40, and a first gasket G1.

The battery housing 30 may have an opening formed on one side. The battery housing 30 may accommodate an electrode assembly 10. The battery housing 30 may have an opening formed on one side to accommodate the electrode assembly 10. The battery housing 30 may be a roughly cylindrical container having an upper opening, and may be made of a conductive metal material. The battery housing 30 may have an opening at the top and a closed portion at the bottom in the height direction. The battery housing 30 may also accommodate an electrolyte through the opening.

The first current collector Q may be coupled to one surface of the electrode assembly 10. The first current collector Q may be coupled to one surface of the electrode assembly 10 on the opening of the battery housing 30. The first current collector Q may have a first coupling portion Q1 coupled to the electrode assembly 10.

The top cap 40 may be configured to cover the opening formed on one side of the battery housing 30. The top cap 40 may be configured to be electrically insulated from the electrode assembly 10 and the battery housing 30 so as not to have a polarity.

The top cap 40 may have a venting unit 41 configured to rupture when the internal pressure of the battery 1 increases. The venting unit 41 may be configured to be weaker than the surrounding area. The venting unit 41 may be configured to be thinner than the remaining area of the top cap 40.

The first gasket G1 may be interposed between the top cap 40 and the battery housing 30. The first gasket G1 may be deformed together with the battery housing 30 during the crimping process so as to be in close contact with the inner surface of the battery housing 30 and the top cap 40. The first gasket G1 may include a resin material having insulation and elasticity.

The terminal T1 may be electrically connected to the second electrode 13. The terminal T1 may penetrate the closed portion of the battery housing 30 provided on the opposite side of the opening of the battery housing 30 to be electrically connected to the second electrode 13. The terminal T1 may penetrate approximately the center of the lower surface of the battery housing 30. The terminal T1 may be coupled to the second current collector P to be electrically connected to the electrode assembly 10. In this case, the battery housing 30 may be used as an external terminal of an electrode other than the terminal T1.

The second current collector P may be electrically connected to the second electrode 13. The second current collector P may have a second coupling portion P1 that is coupled to the terminal T1. The second current collector P may be electrically connected to the terminal T1.

The second gasket G2 may be interposed between the terminal T1 and the battery housing 30. The second gasket G2 may be deformed together with the terminal T1 when it is riveted, and may be closely attached to the inner surface of the closed portion of the battery housing 30. The second gasket G2 may include a resin material having insulation and elasticity.

The insulator IS may be located on the electrode assembly 10 for insulation between the battery housing 30 and the second electrode 13. The insulator IS may be interposed between the battery housing 30 and the electrode assembly 10 or between the battery housing 30 and the second current collector P. The insulator IS may be in the form of a substantially flat plate or in the form of a substantially cup having a side cover portion extending from an edge of the plate-type insulator. In the case where the insulator IS is configured in the form of a substantially cup, insulation between the side of the electrode assembly 10 and the side wall of the battery housing 30 and/or insulation between the second current collector P and the side wall of the battery housing 30 may be performed by the side cover portion of the insulator IS. The insulator IS may include a resin material having insulation. The insulator IS may have a hole in the substantially center so that the terminal T1 may be electrically connected to the electrode assembly 10. The hole of the insulator IS may be larger than the maximum width of the combination of the terminal T1 and the second gasket G2 inside the battery 1.

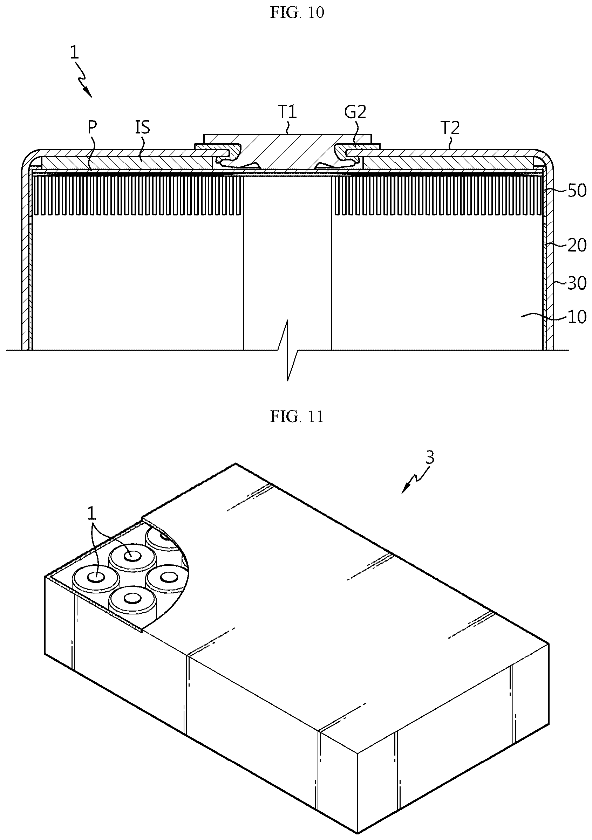

Meanwhile, referring to FIG. 10, the battery 1 of the present disclosure may include an insulating member 50 for improving insulation performance. The insulating member 50 may be a tape. The insulating member 50 may prevent electrical connection between the second current collector P and the side wall of the battery housing 30 and/or electrical connection between the side wall of the electrode assembly 10 and the battery housing 30, in particular, when the insulator IS is not configured to cover the sides of the second current collector P and/or the electrode assembly 10. That is, the insulating member 50 may be configured to cover the outer circumference of the second current collector P and/or the circumference of the upper area of the outer surface of the electrode assembly 10. When the second current collector P is disposed on one side of the electrode assembly 10, the insulating member 50 may be configured to cover the circumference of the upper area of the outer surface of the electrode assembly 10 and the edge of the upper surface of the second current collector P.

For attachment of the insulating member 50, the distance between the upper end of the fixing member 20 and the upper end of the separator 15 may be greater than the distance between the lower end of the fixing member 20 and the lower end of the separator 15. When attempting to attach the insulating member 50 onto the fixing member 20, the adhesive strength may be low. This low adhesive strength may be due to the material properties of the fixing member 20 and the insulating member 50. The fixing member 20 may include, for example, polypropylene. The insulating member 50 may be, for example, polyimide.

In the manufacturing process of the battery 1, the fixing member20 may be preferentially attached around the electrode assembly10 and then the insulating member50 may be attached. Therefore, in order to prevent attachment failure due to the low adhesive strength described above, it is necessary to place the separator15 at the position where the insulating member50 is to be attached. Considering this, it may be desirable for the upper end of the fixing member20 of the present disclosure to be positioned lower than the upper end of the separator15.

In the entire battery 1 structure described above, the gas generated inside the battery 1 may be emitted in the direction where the second electrode 13, which is the negative electrode, is located. The electrode assembly10 inside the battery 1 may be greatly affected by the gas at the lower portion depending on the flow of gas. Therefore, the attachment position of the fixing member 20 may be configured such that the distance between the upper end of the fixing member 20 and the upper end of the separator 15 in the upper portion is greater than the distance between the lower end of the fixing member 20 and the lower end of the separator 15. That is, it is desirable to fix the lower portion of the electrode assembly 10, which is more affected by gas than the upper portion, over the wider area with the fixing member 20.

FIG. 11 is a drawing illustrating a battery pack 3 according to an embodiment of the present disclosure.

Referring to FIG. 11, a battery pack 3 according to the present disclosure may include a battery 1. The battery pack 3 may further include various components, in addition to the battery 1, for example, components of the battery pack 3 known at the time of filing the present disclosure, such as a BMS, a bus-bar, a pack case, a relay, a current sensor, and the like.

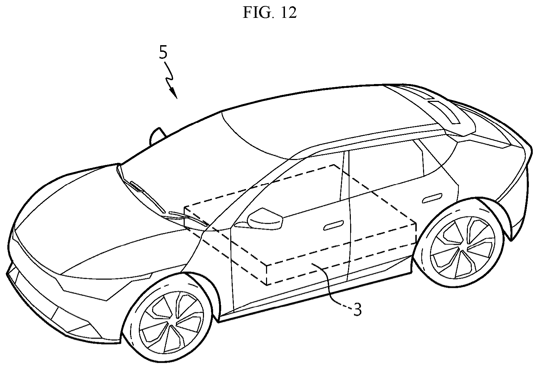

FIG. 12 is a drawing illustrating a vehicle 5 according to the present disclosure.

Referring to FIG. 12, the vehicle 5 according to the present disclosure may include a battery pack 3. The vehicle 5 may be a hybrid vehicle 5 or an electric vehicle 5. The vehicle 5 according to the present disclosure may further include various other components included in the vehicle 5, in addition to the battery pack 3. For example, the vehicle 5 according to the present disclosure may further include a car body, a motor, a control device such as an ECU (electronic control unit), and the like, in addition to the battery pack 3 according to the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

### [Description of Reference numerals]

1: Battery
3: Battery pack
5: Vehicle
10: Electrode assembly
11: First electrode
13: Second electrode
15: Separator
10': Stack
H: Central winding hole
O: Outer circumference
20: Fixing member
30: Battery housing
40: Top cap
41: Venting unit
G1: First gasket
G2: Second gasket
T1: Terminal
IS: Insulator
Q: First current collector
Q1: First joint
P: Second current collector
P1: Second joint
50: Insulating member

## Claims

1. An electrode assembly comprising:
a stack comprising a first electrode, a second electrode, and a separator interposed therebetween, and configured to be wound around a winding axis to form a central winding hole and an outer surface; and
a fixing member configured to cover at least a portion of the outer surface along a circumferential direction of the outer surface.

2. The electrode assembly according to claim 1,
wherein the fixing member is configured to cover at least a portion of an area of the outer surface corresponding to the separator.

3. The electrode assembly according to claim 1,
wherein the fixing member is configured cover at least a portion of an end where the winding of the stack ends.

4. The electrode assembly according to claim 1,
wherein a lower end of the fixing member is positioned at the same height as or higher than a lower end of the separator, and
wherein a distance between the lower end of the fixing member and the lower end of the separator is 0.055 times a height of the separator or less.

5. The electrode assembly according to claim 1,
wherein an upper end of the fixing member is lower than an upper end of the separator by 0.04 to 0.1 times a height of the separator.

6. The electrode assembly according to claim 1,
wherein the first electrode protrudes above the separator, and
wherein the second electrode protrudes below the separator.

7. The electrode assembly according to claim 1,
wherein the first electrode is a positive electrode, and
wherein the second electrode is a negative electrode.

8. A battery comprising an electrode assembly according to any one of claims 1 to 7.

9. A battery pack comprising a battery according to claim 8.

10. A vehicle comprising a battery pack according to claim 9.
